# EUROPÄISCHE PATENTSCHRIFT

(11) **EP 2 155 450 B1**
(45) Veröffentlichungstag und Bekanntmachung des Hinweises auf die Patenterteilung: **27.01.2016**
(21) Anmeldenummer: 08801463.4
(22) Anmeldetag: 13.06.2008
(51) Int. Cl.: B26D 7/06, B29C 31/08, B26F 3/00, B26D 1/56, B26F 1/08, B26D 7/20

(54) **MATERIALSTRANG-BEHANDLUNGSVORRICHTUNG UND VERFAHREN ZUR BEHANDLUNG EINES MATERIALSTRANGS**
TREATMENT DEVICE FOR MATERIAL STRANDS AND METHOD FOR TREATING A MATERIAL STRAND
DISPOSITIF DE TRAITEMENT DE BOUDIN DE MATIÈRE ET PROCÉDÉ POUR TRAITER UN BOUDIN DE MATIÈRE

(30) Priorität: 15.06.2007 DE 102007027531
(43) Veröffentlichungstag der Anmeldung: 24.02.2010
(73) Patentinhaber: Schmidt & Heinzmann GmbH & Co. KG, 76646 Bruschsal (DE)
(72) Erfinder: BRÜSSEL, Richard, 75056 Sulzfeld (DE)
(74) Vertreter: Daub, Thomas
(86) Internationale Anmeldenummer: PCT/EP2008/004766
(87) Internationale Veröffentlichungsnummer: WO 2008/151815

(56) Entgegenhaltungen:
- DE-C1- 4 011 104
- US-A- 4 790 224
- US-A1- 2006 196 332

## Beschreibung

### Stand der Technik

Die Erfindung geht aus von einer Materialstrang-Behandlungsvorrichtung und einem Verfahren zur Behandlung eines Materialstrangs nach den Oberbegriffen der unabhängigen Ansprüche.

Aus der Druckschrift DE 102 33 299 A1 sind eine Vorrichtung mit einer Hebevorrichtung und ein Verfahren zur Aufnahme eines auf einem Transportband aufliegenden Materialstrangs in Form eines Plastifikats, insbesondere eines klebrigen Plastifikats, zum Transport und zum Ablegen in der Pressform einer Formpresse bekannt. Hierbei wird das Plastifikat von einem oder mehreren elastischen Trageblechen aufgenommen.

Zudem ist aus der Druckschrift US 4,790,224 A eine Materialstrang-Behandlungsvorrichtung bekannt, die eine Trenneinrichtung zum Unterteilen eines Materialstrangs und ein Transportsystem umfasst, das zumindest eine vordere und eine hintere Transporteinheit aufweist, wobei die Trenneinrichtung an einem Spalt zwischen den Transporteinheiten angeordnet ist.

Ferner umfasst die Materialstrang-Behandlungsvorrichtung zumindest eine Antriebseinheit, die dazu vorgesehen ist, zumindest eine Transporteinheit relativ zur anderen Transporteinheit zu bewegen, wodurch der Materialstrang den Spalt zwischen den Transporteinheiten überbrücken kann. Des Weiteren weist die Materialstrang-Behandlungsvorrichtung eine Höheneinstelleinheit auf, die dazu vorgesehen ist, eine Relativbewegung in vertikaler Richtung zu bewirken.

Soll der Materialstrang geschnitten werden, sind so genannte Direktverfahren bekannt, bei denen kontinuierlich ausgetragene, faserverstärkte, klebrige und lappige Materialstränge direkt zu einem Formteil verarbeitet werden. Diese Materialstränge werden meist von Drahtgeflechtsgurten aufgenommen und weitertransportiert.

Das Schneiden erfolgt im ausgetragenen Zustand meist scherenartig, damit der klebrige Materialstrang nicht auf das Transportband gedrückt wird. Hierzu ist das Transportsystem beispielsweise in zwei Transporteinheiten geteilt, damit Scherenteile zwischen der Endumlenkung und der Anfangsumlenkung der beiden Transporteinheiten Platz finden.

Der Austrag des Materialstrangs findet in der Regel, wie erwähnt, kontinuierlich und häufig auch mit variabler Geschwindigkeit statt. Daher wird die Schere zum Schneiden mit den Transporteinheiten mit der aktuellen Austragsgeschwindigkeit mitbewegt. Nach erfolgtem Schnitt wird die Schere wieder auf ihre Ausgangsposition zurückbewegt, um für den nächsten Schnitt bereit zu sein. Die Rückfahrgeschwindigkeit und die jeweilige Transporteinheitsgeschwindigkeit werden so eingestellt, dass der ungeschnittene Materialstrang auf der vorderen Transporteinheit nur die Austragsgeschwindigkeit erfährt. Nach dem Schneidevorgang und vor der Rückfahrt kann die hintere Transporteinheit mit höherer Geschwindigkeit den auf Länge geschnittenen Materialstrang wegtransportieren. Aufgrund der Unterteilung des Transportgurts durch den Scherenspalt sind der Lappigkeit des Materialstrangs enge Grenzen gesetzt, was durch dessen Klebrigkeit noch verstärkt wird. Zwar kann dieser mit Antihaftbeschichtungen bzw. Antihaftpulver auf dem Transportband entgegengewirkt werden, jedoch ist immer noch eine hinreichend große Steifigkeit des Materialstrangs erforderlich, damit dieser den Spalt überwinden kann. Andererseits können bei dicken Materialsträngen die Schnittflächen an den Scherenblättern haften bleiben und eine störungsfreie Produktion verhindern.

Der Erfindung liegt insbesondere die Aufgabe zugrunde, eine Materialstrang-Behandlungsvorrichtung und ein Verfahren zur Behandlung von Materialsträngen zu schaffen, mit dem eine verbesserte Handhabung von lappigen, dünnen und klebrigen Materialsträngen erfolgen kann.

Sie wird gemäß der Erfindung durch die Merkmale der unabhängigen Ansprüche gelöst. Weitere Ausgestaltungen ergeben sich aus den Unteransprüchen.

### Vorteile der Erfindung

Die Erfindung geht aus von einer Materialstrang-Behandlungsvorrichtung mit einer Trennungseinrichtung zum Unterteilen eines Materialstrangs sowie mit einem Transportsystem, das zumindest eine vordere und eine hintere Transporteinheit aufweist, und mit zumindest einer Antriebseinheit, die dazu vorgesehen ist, zumindest eine Transporteinheit relativ zur anderen Transporteinheit zu bewegen, wodurch der Materialstrang den Spalt zwischen den Transporteinheiten überbrücken kann, und mit einer Höheneinstelleinheit, die dazu vorgesehen ist, eine Relativbewegung in vertikaler Richtung zu bewirken.

Es wird vorgeschlagen, dass die Antriebseinheit dazu vorgesehen ist, eine Scheitelhilfslinie der vorderen Transporteinheit über eine Scheitelhilfslinie der hinteren Transporteinheit zu führen, wobei bei einer Bewegung der vorderen Transporteinheit zu der hinteren Transporteinheit in Richtung einer Transportrichtung die vordere Transporteinheit einen Hub erfährt, so dass sich durch die Höheneinstelleinheit ein Höhenversatz zwischen Oberseiten von Transportbändern der beiden Transporteinheiten einstellt. Unter einer Antriebseinheit soll hier insbesondere eine Vorrichtung verstanden werden, die beide Transporteinheiten und/oder jede Transporteinheit einzeln in eine beliebige Richtung zu bewegen vermag. Der Materialstrang besteht vorzugsweise aus einem plastischen Material, vorzugsweise einem Plastifikat. Der Spalt hat in der Regel eine Breite zwischen 10 und 30 mm, ist jedoch idealerweise auf die Gegebenheiten des zu bearbeitenden Materials abgestimmt. Vorteilhaft ist an dem Spalt zwischen den Transporteinheiten eine Trenneinrichtung angeordnet. Die Trenneinrichtung ist vorteilhafterweise von zwei Schneidblättern gebildet, die jeweils oberhalb und unterhalb des Materialstrangs angeordnet sind. Es sind aber auch andere, dem Fachmann als zweckdienlich erscheinende Trennmittel, wie zum Beispiel Laseranordnungen, denkbar. Liegt der abgetrennte Teil des Materialstrangs nach dem Trennvorgang auf der hinteren Transporteinheit auf, kann er beispielsweise mit erhöhter Geschwindigkeit weitertransportiert werden. Die Unterteilung des Transportsystems in einzelne, relativ zueinander entlang einer Achse der Transportrichtung bewegliche Transporteinheiten bietet durch weitere Ausgestaltungen weitere Vorteile. So können nicht nur lappige und relativ dünne sowie auch klebrige Materialstränge, sondern auch relativ dicke Materialstränge, insbesondere klebrige Materialstränge, zuverlässig unterteilt werden. Unter der Bezeichnung "vordere Transporteinheit" soll bevorzugt die Transporteinheit verstanden werden, die, in Transportrichtung gesehen, näher an einer Austragsstelle des Materialstrangs angeordnet ist. Analog dazu definiert die Wendung "hintere Transporteinheit" die in Transportrichtung von der Austragsstelle weiter entfernte Transporteinheit.

Des Weiteren wird vorgeschlagen, dass die vordere Transporteinheit in Richtung der Transportrichtung und/oder relativ zum Materialstrang bewegbar ist. Dadurch kann vorteilhaft erreicht werden, dass nach dem Unterteilen des Materialstrangs und einem Abtransport des abgetrennten Teils des Materialstrangs ein neu auskragender Materialstranganfang sicher auf einer Transporteinheit aufliegt. Zusätzlich kann verhindert werden, dass er sich abbiegt und in den Spaltbereich einläuft. Eine Bewegung der vorderen Transporteinheit relativ zum Materialstrang in Transportrichtung kann bei einer konstanten Geschwindigkeit des Materialstrangs durch eine Bewegung der gesamten vorderen Transporteinheit gewährleistet werden. Die Nettogeschwindigkeit der vorderen Transporteinheit bleibt die gleiche im Vergleich zu einer Austrags- und/oder Schneidegeschwindigkeit, da die Bewegung der vorderen Transporteinheit in Transportrichtung durch eine regelungslose Bewegung eines Transportbands der vorderen Transporteinheit entgegen der Transportrichtung ausgeglichen wird.

Die Transporteinheiten können bevorzugt relativ zueinander so beweglich sein, dass bei einer Annäherung während einer Bewegung eine erste Scheitelhilfslinie einer Endumlenkung der vorderen Transporteinheit in Transportrichtung mit einer zweiten Scheitelhilfslinie einer Anfangsumlenkung der hinteren Transporteinheit mindestens zusammenfällt. Damit wird der Spalt zwischen den Transporteinheiten sicher überwunden und der Materialstranganfang wird zuverlässig zur hinteren Transporteinheit gebracht. Ein unerwünschtes Umlaufen des Anfangsstücks des Materialstrangs um die Endumlenkung der vorderen Transporteinheit kann damit umgangen werden.

Ein Ablegen des Materialstranganfangs auf der hinteren Transporteinheit wird weiterhin vorteilhaft erleichtert, wenn die Antriebseinheit dazu vorgesehen ist, die Scheitelhilfslinie der ersten Transporteinheit über die Scheitelhilfslinie der zweiten Transporteinheit zu führen. Unter einer Scheitelhilfslinie soll eine gedachte Linie verstanden werden, die durch einen Scheitelpunkt verläuft und insbesondere durch jeweils den Scheitelpunkt der Endumlenkung der vorderen Transporteinheit bzw. durch den Scheitelpunkt der Anfangsumlenkung der hinteren Transporteinheit. Der Scheitelpunkt wiederum ist in dem Punkt definiert, in dem die Transportbänder der Transporteinheiten ihre Transportrichtung ändern. Die Scheitelhilfslinien durch die Scheitelpunkte der vorderen Endumlenkung der vorderen Transporteinheit und der Anfangsumlenkung der hinteren Transporteinheit verlaufen bevorzugt parallel zueinander.

Erfindungsgemäß umfasst die Vorrichtung eine Höheneinstelleinheit, die dazu vorgesehen ist, eine Relativbewegung in vertikaler Richtung zu bewirken, womit die Komponenten der Materialstrang-Behandlungsvorrichtung, wie beispielsweise die Antriebseinheit und/oder die Transporteinheiten, insbesondere in verschiedenen Betriebsmodi einfach relativ zueinander positioniert werden können. Die Höheneinstelleinheit kann eine manuell, mechanisch, elektrisch, elektromagnetisch, pneumatisch und/oder hydraulisch betriebene Vorrichtung sein.

Erfindungsgemäß ist mit der Höheneinstelleinheit ein Höhenversatz zwischen den beiden Transporteinheiten einstellbar. Dadurch wird ein Übergang des Materialstrangsanfangs von der vorderen zu der hinteren Transporteinheit zur Vorbereitung eines neuen Trennschnitts im Materialstrang weiter erleichtert. Der Höhenversatz ist idealerweise zwischen 1 mm und 4 mm größer als die Endumlenkung der vorderen Transporteinheit, die einen Durchmesser von 8 bis 50 mm, bevorzugt von ca. 30 mm aufweist. Generell kann der Durchmesser der Endumlenkung an die Gegebenheiten, wie Material und/oder Steifigkeit, des Transportbands der Transporteinheit und/oder des zu transportierenden Materialstrangs abgestimmt werden.

Es kann ein Hubzylinder vorgesehen sein, um den Höhenversatz einzustellen. So kann der Hubzylinder beispielsweise direkt einen Höhenversatz der beiden Transporteinheiten und/oder nur einer Transporteinheit bewirken, indem etwa ein Ende der einen Transporteinheit angehoben wird, oder indirekt über eine geführte Bewegung der Transporteinheit. Es sind aber auch andere Mittel denkbar, die ein Fachmann für zweckdienlich hält, um einen Höhenversatz einstellen zu können.

Zusätzlich oder alternativ kann die Höheneinstelleinheit zumindest eine Rampe aufweisen. So kann der Hubzylinder beispielsweise indirekt einen Höhenversatz der beiden Transporteinheiten bewirken, indem über eine Bewegung der entsprechenden Transporteinheit entlang der Rampe die Transporteinheit zwangsweise in vertikaler und horizontaler Richtung geführt wird. Dies führt besonders einfach und reproduzierbar zu einer ausreichenden Hubbewegung. Unter einer Rampe soll hier insbesondere eine Verbindungsstrecke zwischen zwei bevorzugt horizontalen Teilstrecken verstanden werden, wobei die Verbindungsstrecke gegenüber den Teilstrecken einen Neigungswinkel abweichend von 180 Grad aufweist. Der Neigungswinkel und/oder die Länge der Verbindungsstrecke wiederum sind vorteilhaft auf die Dimension der Endumlenkung der vorderen Transporteinheit bzw. den Höhenversatz abgestimmt. Es kann jedoch auch jede andere, dem Fachmann als zweckdienlich erscheinende Maßnahme ergriffen werden, etwa mit einem Kettentrieb und dergleichen, um einen Höhenversatz zu bewirken.

Die Transporteinheiten können zumindest eine Anfangsumlenkung und eine Endumlenkung aufweisen, wobei ein Durchmesser der Endumlenkung der vorderen Transporteinheit kleiner ist als ein Durchmesser der Anfangsumlenkung der hinteren Transporteinheit. Dadurch kann bei einer Annäherung ein Überlapp über den beiden Transporteinheiten in der Achse der Transportrichtung ermöglicht werden, so dass eine übermäßige Hubbewegung bzw. ein unnötig voluminöser Aufbau zur Erreichung der Hubbewegung vermieden werden kann. Entsprechend kann bei einem kontinuierlichen Materialaustrag aus einer Düse der Materialstrang hinreichend schnell bearbeitet werden.

Eine Kombination eines Übereinanderbewegens der beiden Transporteinheiten mit dem kleineren Durchmesser der Endumlenkung der vorderen Transporteinheit wirkt hier besonders günstig. Nachdem der Trennschnitt ausgeführt ist, kann die Endumlenkung der vorderen Transporteinheit über die Anfangsumlenkung der hinteren Transporteinheit bewegt werden. Dabei kann vorteilhafterweise der Beginn des neuen Materialstrangs beim Vorfahren der Endumlenkung mindestens bis zu deren gedachter Scheitelhilfslinie aufgenommen werden. Der für den Schnitt auskragende Anfang des Materialstrangs hat dann keine Möglichkeit mehr, sich abzubiegen. Damit der Transport des Materialstrangs über den Spalt bzw. von der vorderen auf die hintere Transporteinheit besonders sicher gelingt, kann die Endumlenkung der vorderen Transporteinheit über die Anfangsumlenkung der hinteren Transporteinheit gefahren werden und die vordere Transporteinheit dann mit relativ hoher Geschwindigkeit unter dem Anfang des Materialstrangs weggezogen werden. Der freie Materialstrang-Anfang kommt innerhalb kürzester Zeit auf der hinteren Transporteinheit zur Auflage, so dass eine Verzerrung oder Verwerfung des Materialstrangs vermieden werden kann. Idealerweise kann die Transportgeschwindigkeit des Transportbands der vorderen Transporteinheit dabei regelfrei gesteuert werden, da durch die Reaktion des Hubzylinders bzw. die vertikale und/oder horizontale Verschiebung der vorderen Transporteinheit ein Antriebsstrang, der das Transportband der vorderen Transporteinheit antreibt, dieses Transportband entgegen der Transportrichtung zieht. Es ist auch denkbar, dass die Transportbandgeschwindigkeiten der Transporteinheiten, und zwar sowohl in Vorwärtsrichtung als auch in Rückwärtsrichtung, geeignet per Regelung eingestellt werden.

Ferner ist es von Vorteil, wenn die End- und/oder Anfangsumlenkung zumindest einer der Transporteinheiten eine Trennkante aufweisen kann. Dadurch ist zum Unterteilen des Materialstrangs im Bereich der Trenneinrichtung nur ein bewegliches Schneidblatt notwendig statt zweier beweglicher Schneidblätter. Unter einer Trennkante soll hier eine Messerkante verstanden werden, die bevorzugt verstellbar angeordnet ist. Es sind aber auch andere, dem Fachmann als sinnvoll erscheinende Trennmittel, wie ein Schneiddraht, denkbar.

Wenigstens einer der Transporteinheiten kann eine Temperiereinrichtung zugeordnet sein. Dies ist für die Behandlung des Materialstrangs günstig, der auf diese Weise länger eine gewünschte Geschmeidigkeit aufweisen kann, bis der Materialstrang in eine Endform gebracht werden kann. Als Temperiereinrichtung können hier in die Transporteinheit, insbesondere in eine Transportoberfläche der Transporteinheit, eingezogene Drähte und/oder Kissen wirken. Bevorzugt kann wenigstens eine der Transporteinheiten eine Heizeinrichtung aufweisen. Diese Heizeinrichtung ist entweder in zumindest eine der Transporteinheiten eingebracht und/oder als separate Heizeinrichtung an zumindest einer der Transporteinheiten angeordnet. Zusätzlich oder alternativ kann die Temperiereinrichtung eine Abdeckhaube umfassen. Besonders günstig ist, wenn die Abdeckhaube ein Heizelement umfasst, etwa Infrarotstrahler oder eine andere zweckmäßige Beheizung.

Eine vorteilhafte Führung des Materialstrangs gelingt, wenn zumindest eine Steuerungs- und/oder Regelungseinrichtung vorgesehen ist, die zur Einstellung einer jeweiligen Transportgeschwindigkeit der Transporteinheiten bzw. der zu den Transporteinheiten gehörenden Transportbänder und/oder anderer angeordneter Bewegungseinrichtungen dienen kann. Die Einstellung erfolgt über an die Einheiten und/oder Einrichtungen angeordnete Antriebe. Jede der Transporteinheiten kann auf diese Weise mit einer geeigneten Vorschubgeschwindigkeit oder auch einer Rückholgeschwindigkeit gegenüber der anderen Transporteinheit und/oder auch gegenüber dem Materialstrangaustrag aus der Düse beaufschlagt werden. Die Steuerungs- und/oder Regelungseinrichtung kann aber auch andere Parameter steuern, wie etwa eine Temperatureinstellung der Temperiereinrichtung, der Heizeinrichtung und/oder des Heizelements. Ferner kann auch die Geschwindigkeit des Materialstrangaustrags und/oder die Materialstärke beim Materialstrangaustrag durch die Steuerungs- und/oder Regelungseinrichtung gesteuert werden. Weiterhin ist auch eine Steuerung und/oder Regelung der Trenneinrichtung möglich und/oder eines anderen, dem Fachmann als zweckdienlich erscheinenden Parameters. Eine Informationsverbindung bzw. eine Übertragung von Signalen zwischen der Steuerungs- und Regelungseinrichtung zu ihren Zieleinheiten kann über ein Kabel und/oder kontaktlos per Funk, per Infrarot und/oder per Ultraschall erfolgen, es ist aber auch eine weitere, dem Fachmann als sinnvoll erscheinende Übertragungsart denkbar.

Die Erfindung geht weiterhin von einem Verfahren zum Behandeln eines Materialstrangs in einer Materialstrang-Behandlungsvorrichtung aus, mit einer Trenneinrichtung, mit der der Materialstrang unterteilt wird, sowie mit einem Transportsystem mit einer vorderen und hinteren Transporteinheit, auf der der Materialstrang aufgebracht wird, wobei die Trenneinrichtung an einem Spalt zwischen den Transporteinheiten angeordnet ist, und mit zumindest einer Antriebseinheit, die dazu vorgesehen ist, zumindest eine Transporteinheit relativ zur anderen Transporteinheit zu bewegen, wodurch der Materialstrang den Spalt zwischen den Transporteinheiten überbrücken kann, wobei nach einem Trennvorgang wenigstens eine der Transporteinheiten relativ zur anderen Transporteinheit bewegt wird.

Es wird vorgeschlagen, dass die Antriebseinheit eine Scheitelhilfslinie der vorderen Transporteinheit über eine Scheitelhilfslinie der hinteren Transporteinheit führt, wobei bei einer Bewegung der vorderen Transporteinheit zu der hinteren Transporteinheit in Richtung einer Transportrichtung die vordere Transporteinheit einen Hub erfährt, so dass sich durch eine Höheneinstelleinheit ein Höhenversatz zwischen Oberseiten von Transportbändern der beiden Transporteinheiten einstellt. Durch diese Bewegung kann sichergestellt werden, dass auch ein dünner Materialstrang, der nicht besonders starr ist, einen Spalt zwischen den Transporteinheiten leicht überwinden kann.

Ferner wird vorgeschlagen, dass nach dem Unterteilen des Materialstrangs die vordere Transporteinheit in Richtung der Transportrichtung und/oder relativ zum Materialstrang bewegt wird. Dadurch kann das sichere Aufliegen des neu auskragenden Materialstranganfangs auf der vorderen Transporteinheit gewährleistet werden, wodurch weiterhin verhindert werden kann, dass sich der Materialstrang nach dem Unterteilen am neuen Materialstranganfang abbiegt und in den Spaltbereich einläuft.

Vorteilhaft kann nach dem Unterteilen bei Annäherung der beiden Transporteinheiten die vordere Transporteinheit über die hintere Transporteinheit bewegt werden. Dadurch kann das Ablegen des Materialstranganfangs auf der hinteren Transporteinheit erleichtert werden. Weiterhin kann es von Vorteil sein, wenn bei der Übergabe des Materialstrangs von der vorderen auf die hintere Transporteinheit die vordere Transporteinheit mit höherer Geschwindigkeit unter dem Materialstranganfang zurückgezogen wird als der Geschwindigkeit, die einer Transportgeschwindigkeit der hinteren Transporteinheit bzw. einer Transportgeschwindigkeit des Materialstrangs entspricht. Vorzugsweise wird eine relativ hohe Geschwindigkeit für das Zurückziehen gewählt. Damit wird die Übergabe des Materialstrangs von der vorderen auf die hintere Transporteinheit verbessert, der auf diese Weise ohne Verzerrung oder Verwerfung auf beiden Transporteinheiten transportiert werden kann. Durch geeignete Einstellung der Transportbandgeschwindigkeiten kann der Materialstrang vorteilhaft insgesamt seine Austragsgeschwindigkeit beibehalten.

Alternativ kann nach dem Unterteilen bei Annäherung der beiden Transporteinheiten auch die hintere Transporteinheit unter die vordere Transporteinheit bewegt werden. Der Fachmann wird je nach den gegebenen Rahmenbedingungen der Vorrichtung die geeignete Variante wählen. Denkbar ist auch, dass eine entsprechende Bewegung beider Transporteinheiten in derselben Vorrichtung möglich ist und wahlweise eingestellt werden kann.

Die Verarbeitbarkeit bei einem etwaigen späteren Formschritt wird verbessert, wenn der Materialstrang auf wenigstens einer der beiden Transporteinheiten beheizt und/oder zumindest warm gehalten werden kann.

Eine bevorzugte Weiterbildung besteht darin, dass eine Dosiereinrichtung angeordnet ist, die dazu vorgesehen ist, einen dickengeregelten Materialaustrag einzustellen, so dass der Materialstrang in einem Unterteilbereich mit einer reduzierten Materialstärke versehen wird. Dies ist insbesondere bei erhöhter Materialdicke des Materialstrangs von Vorteil, da ein Verschmutzen der Schneidklingen durch daran unerwünscht anhaftende dicke Materialstrangenden damit zuverlässig vermieden werden kann. Ein kontinuierlicher Austrag des Materialstrangs sowie eine störungsfreie Produktion können trotz Unterteilen des Materialstrangs erreicht werden. Unter einer Dosiereinrichtung soll hier eine Einrichtung verstanden werden, mit der die Dicke des Materialstrangs beeinflusst werden kann, wie zum Beispiel eine dickengeregelte Austragsdüse und/oder eine andere, dem Fachmann als zweckdienlich erscheinende Dosiereinrichtung. Die Dickenreduzierung liegt in einem Bereich von vorteilhaft 30 % bis 90 %, besonders vorteilhaft von 70 % bis 90 % und insbesondere vorteilhaft kleiner als 85 % der Materialstrangstärke. Somit ist beispielsweise eine bevorzugte Dicke des Materialstrangs von 2 bis 4 mm an der dickenreduzierten Stelle erreichbar.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine bevorzugte Materialstrang-Behandlungsvorrichtung mit einem Materialstrang, der über einen Spalt zwischen zwei Transporteinheiten transportiert wird, und
- Fig. 2: eine Detailansicht aus Figur 1.

### Beschreibung des Ausführungsbeispiels

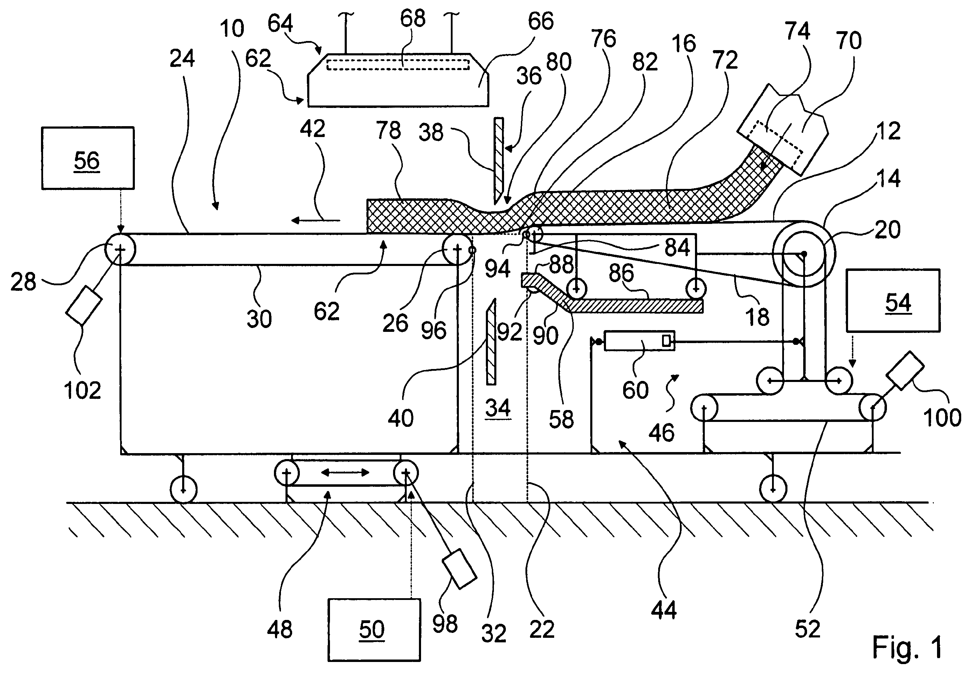

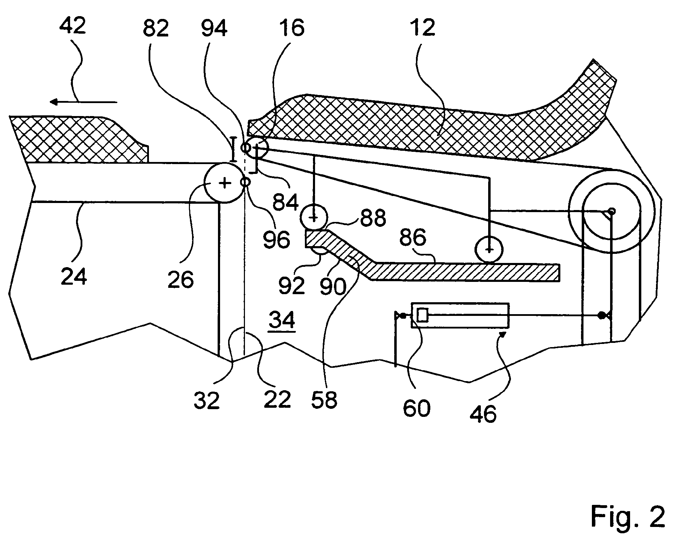

Zur Erläuterung der Erfindung zeigt Figur 1 beispielhaft eine nicht näher bezeichnete Materialstrang-Behandlungsvorrichtung mit einer Trenneinrichtung 36 zum Unterteilen eines Materialstrangs 72, der in Transportrichtung 42 auf ein Transportsystem 10 aufbringbar ist. Das Transportsystem 10 ist in zwei in einer Achse angeordnete Transporteinheiten 12 und 24 unterteilt. Die Achse entspricht einer Transportrichtung 42 ohne Richtungspfeil. Die vordere Transporteinheit 12 umfasst ein Transportband 18 sowie eine Anfangsumlenkung 14 und eine Endumlenkung 16. Die hintere Transporteinheit 24 umfasst ein Transportband 30 sowie eine Anfangsumlenkung 26 und eine Endumlenkung 28. Zwischen einer ersten erdachten Scheitelhilfslinie 22, die durch eine Linie in einem Scheitelpunkt 94 der Endumlenkung 16 der vorderen Transporteinheit 12 definiert ist, und einer zweiten erdachten Scheitelhilfslinie 32, die durch eine Linie in einem Scheitelpunkt 96 der Anfangsumlenkung 26 der hinteren Transporteinheit 24 definiert ist, ist ein Spalt 34 ausgebildet (Figur 2).

Die Trenneinrichtung 36 ist in dem Spalt 34 zwischen den aufeinander folgenden vorderen und hinteren Transporteinheiten 12 und 24 angeordnet und vorzugsweise als Scherenvorrichtung mit einem oberen Schneidblatt 38 und einem unteren Schneidblatt 40 ausgebildet. Eines der Schneidblätter 38, 40 kann aber auch durch eine verstellbare Trennkante 84, die beispielsweise an der Endumlenkung 16 angeordnet ist, ersetzt werden. Der Materialstrang 72 wird zwischen den Scherenblättern 38, 40 durchgeführt.

Die Trenneinrichtung 36 kann mittels einer Bewegungsvorrichtung 48 in der Form eines Zahnriemens zusammen mit den Transporteinheiten 12 und 24 verfahren werden. Die Bewegungsvorrichtung 48 wird von einem Regelantrieb 98 angetrieben und von einer Steuerungs- und/oder Regelungseinrichtung 50 mit entsprechenden Einstellsignalen beaufschlagt. Die Transporteinheiten 12 und 24 werden analog von Regelantrieben 100 und 102 angetrieben und von einer Steuerungs- und/oder Regelungseinrichtung 54 bzw. 56 mit Steuerungs- oder Regelsignalen beaufschlagt. Die Steuerungs- und/oder Regelungseinrichtungen 50, 54, und 56 übermitteln ihre Signale bevorzugt mittels nicht näher dargestellter Funkverbindungen und stehen auch untereinander in Kontakt. Es wäre auch denkbar, dass eine der Steuerungs- und/oder Regelungseinrichtungen als Hauptkontrolleinheit zur Abstimmung der Interaktionen der Steuerungs- und/oder Regelungseinrichtungen 50, 54, 56 fungiert.

Um das Bewegen der Transporteinheiten 12 und 24 zu bewirken, ist eine Antriebseinheit 44 angeordnet. Ein Antrieb des Transportbands 18 der vorderen Transporteinheit 12 erfolgt mittels eines Antriebsstrangs 52, der durch den Regelantrieb 100 angetrieben wird und durch die Steuerungs- und/oder Regelungseinrichtung 54 mit Steuerungs- oder Regelsignalen beaufschlagbar ist. Der Antriebsstrang 52 ist mit der Anfangsumlenkung 14 über eine Antriebsscheibe 20 antriebsverbunden. Bei der Bewegung der vorderen Transporteinheit 12 in Richtung der Transportrichtung 42 zu der hinteren Transporteinheit 24 erfährt die vordere Transporteinheit 12 einen Hub, so dass sich durch eine Höheneinstelleinheit 46 ein Höhenversatz 82 zwischen den Oberseiten der Transportbänder 18, 30 der beiden Transporteinheiten 12, 24 einstellt. Dazu ist ein Hubzylinder 60 vorgesehen, der bei der Bewegung der vorderen Transporteinheit 12 auf die hintere Transporteinheit 24 die vordere Transporteinheit 12 über eine Rampe 58 führt. Hierbei wird die Rampe 58 von einer Verbindungsstrecke 90 zwischen einer ersten Teilstrecke 86 und einer zweiten Teilstrecke 88 gebildet. Die Teilstrecken 86, 88 sind horizontal angeordnet und die Verbindungsstrecke 90 ist gegenüber den Teilstrecken 86, 88 in einem Neigungswinkel 92, der von 180 Grad abweicht und vorteilhaft zwischen 135 Grad und 170 Grad und insbesondere vorteilhaft ca. 150 Grad beträgt, angeordnet (Figur 2).

Die Endumlenkung 16 der vorderen Transporteinheit 12 weist einen kleineren Durchmesser auf als dessen Anfangsumlenkung 14 bzw. die Anfangsumlenkung 26 der hinteren Transporteinheit 24. Dadurch kann bei einer Annäherung zwischen den beiden Transporteinheiten 12, 24 die vordere Transporteinheit 12 mit ihrer Endumlenkung 16 über die Anfangsumlenkung 26 der hinteren Transporteinheit 24 bewegt werden und den Spalt 34 völlig überbrücken. Die erste Scheitelhilfslinie 22 ragt dann weiter in Transportrichtung 42 als die zweite Scheitelhilfslinie 32.

Der Materialstrang 72 wird von einer Düse 70 mit einer Austragsgeschwindigkeit auf die vordere Transporteinheit 12 abgelegt und wegtransportiert. In der Darstellung erfolgt der Materialaustrag aus der Düse 70 vermittelt durch eine Dosiereinrichtung 74 dickengesteuert so, dass der Materialstrang 72 vor dem Trennschnitt im Unterteilungsbereich 80 am Spalt 34 eine geringere Materialstärke aufweist als im Bereich 76 vor dem Spalt 34 und im Bereich 78 nach dem Spalt 34.

Zumindest eine Temperiereinrichtung 62, wie etwa eine Heizeinrichtung 64, kann in den Transporteinheiten 12, 24 vorgesehen und/oder den Transporteinheiten 12, 24 zugeordnet sein. Diese Temperiereinrichtung 62 bzw. diese Heizeinrichtung 64 kann durch zumindest eine Abdeckhaube 66 gebildet sein und/oder durch nicht näher dargestellte, in die Transportbänder 18, 30 der Transporteinheiten 12, 24 eingezogene Drähte und/oder eingebettete Kissen realisiert sein. Die Abdeckhaube 66 kann dem Warmhalten und/oder dem zusätzlichen Erhitzen des Materialstrangs 72 dienen. Hierzu ist zumindest ein Heizelement 68, wie beispielsweise ein Infrarotheizkörper, der Abdeckhaube 66 zugeordnet. Zur Ermittlung der Temperatur im Bereich der Abdeckhaube 66 und/oder des Materialstrangs 72 kann ein nicht dargestellter Sensor dienen.

Ein bevorzugtes Verfahren zum Unterteilen des Materialstrangs 72 verläuft beispielhaft so, dass der Materialstrang 72 aus der Düse 70 auf die vordere Transporteinheit 12 ausgetragen wird. Erreicht der Anfang des Materialstrangs 72 die Endumlenkung 16 der vorderen Transporteinheit 12, wird diese, mittels des Hubzylinders 60 und der Rampe 58, über die Anfangsumlenkung 26 der hinteren Transporteinheit 24 mit einer Geschwindigkeit, die der Geschwindigkeit des Materialstrangs 72 entspricht, bewegt. Hierbei bewirkt der Antriebsstrang 52 eine Bewegung des Transportbands 18 entgegen der Transportrichtung 42, wodurch die Nettogeschwindigkeit der vorderen Transporteinheit 12 konstant bleibt. Nach der Ablage des Anfangs des Materialstrangs 72 auf der hinteren Transporteinheit 24 wird die vordere Transporteinheit 12 mit erhöhter Geschwindigkeit, entgegen der Transportrichtung 42, unter dem Materialstrang 72 weggezogen. Die vordere Transporteinheit 12 wird auf ihre Anfangsposition gefahren und der Spalt 34 wird für einen Trennschnitt freigegeben. Ist eine ausreichende Länge des Materialstrangs 72 auf der hinteren Transporteinheit 24 gegeben, werden die beiden Schneidblätter 38, 40 zusammengefahren, und es erfolgt ein Trennschnitt. Dabei werden die Trenneinrichtung 36 und die Transporteinheiten 12 und 24, abgestimmt auf die Geschwindigkeit des Materialstrangs 72, durch die Bewegungsvorrichtung 48 ein Stück in Transportrichtung 42 mitbewegt. Anschließend werden die Schneidblätter 38, 40 wieder getrennt und die Trenneinrichtung 36 und die Transporteinheiten 12 und 24 werden von der Bewegungsvorrichtung 48 entgegen der Transportrichtung 42 auf ihre Anfangspositionen gefahren. Für einen Abtransport des abgeschnittenen Teils des Materialstrangs 72 durch die hintere Transporteinheit 24 muss der Regelantrieb 102 das Transportband 30 um den Betrag schneller in Transportrichtung 42 bewegen, wie die Bewegungsvorrichtung 48 die Transporteinheit 24 entgegen der Transportrichtung 42 bewegt. Nachdem somit der Trennschnitt ausgeführt ist, wird die vordere Transporteinheit 12 in Richtung der Transportrichtung 42 relativ zum neu auskragenden Materialstranganfang bewegt, bis dieser sicher von der vorderen Transporteinheit 12 aufgenommen ist, und zwar bis zur gedachten Scheitelhilfslinie 22 der Endumlenkung 16. Dadurch wird verhindert, dass sich der Materialstranganfang in den Spalt 34 abbiegt. Danach wird die Endumlenkung 16 der vorderen Transporteinheit 12 erneut über die Anfangsumlenkung 26 der hinteren Transporteinheit 24 gefahren und der Übergabeprozess beginnt erneut. Die Geschwindigkeiten der Transportbänder 18, 30 der vorderen und hinteren Transporteinheiten 12, 24 sowie die Geschwindigkeiten der Transporteinheiten 12, 24 selbst und die der Bewegungsvorrichtung 48 werden dabei durch die Steuerungs- und Regelungseinrichtung 50, 54, 56 so geregelt, dass der Materialstrang 72 seine Austragsgeschwindigkeit beibehält und nicht verzerrt wird.

Mit der hohen Rückziehgeschwindigkeit und dem relativ kleinen Durchmesser der Endumlenkung 16 der vorderen Transporteinheit 12 löst sich der Materialstranganfang sicher vom Transportband 18 der vorderen Transporteinheit 12 und überwindet damit sicher und ohne Verwerfungen den Spalt 34 bzw. den Transportübergang zwischen den Transporteinheiten 12 und 24. Da durch diesen Ablauf lappige und relativ dünne sowie auch klebrige Materialien sicher zu schneiden sind und im Unterteilbereich 80 des Materialstrangs 72 sicher über den Spalt 34 bzw. den Transportübergang zwischen den Transporteinheiten 12, 24 gelangen, können auch relativ dicke, klebrige Materialien derart geschnitten werden. Hierzu wird der Materialstrang 72 durch eine Dosiereinrichtung 74 mit einem dickengesteuerten Materialaustrag aus der Düse 70 so gestaltet, dass der Unterteilbereich 80 dünn ausgeführt wird, wie in der Figur angedeutet ist. Ein Verschmutzen der Schneidblätter 38, 40 wird deutlich reduziert und eine störungsfreie Produktion ermöglicht.

**Bezugszeichen**

| | | | |
|---|---|---|---|
| 10 | Transportsystem | | lungseinrichtung |
| 12 | vordere Transporteinheit | 56 | Steuerungs- und Regelungseinrichtung |
| 14 | Anfangsumlenkung | 58 | Rampe |
| 16 | Endumlenkung | 60 | Hubzylinder |
| 18 | Transportband | 62 | Temperiereinrichtung |
| 20 | Antriebsscheibe | 64 | Heizeinrichtung |
| 22 | erste Scheitelhilfsli- | 66 | Abdeckhaube |
| | nie | 68 | Heizelement |
| 24 | hintere Transporteinheit | 70 | Düse |
| | | 72 | Materialstrang |
| 26 | Anfangsumlenkung | 74 | Dosiereinrichtung |
| 28 | Endumlenkung | 76 | Bereich |
| 30 | Transportband | 78 | Bereich |
| 32 | zweite Scheitelhilfslinie | 80 | Unterteilbereich |
| | | 82 | Höhenversatz |
| 34 | Spalt | 84 | Trennkante |
| 36 | Trenneinrichtung | 86 | erste Teilstrecke |
| 38 | oberes Schneidblatt | 88 | zweite Teilstrecke |
| 40 | unteres Schneidblatt | 90 | Verbindungsstrecke |
| 42 | Transportrichtung | 92 | Neigungswinkel |
| 44 | Antriebseinheit | 94 | Scheitelpunkt |
| 46 | Höheneinstelleinheit | 96 | Scheitelpunkt |
| 48 | Bewegungsvorrichtung | 98 | Regelantrieb |
| 50 | Steuerungs- und Regelungseinrichtung | 100 | Regelantrieb |
| | | 102 | Regelantrieb |
| 52 | Antriebsstrang | | |
| 54 | Steuerungs- und Rege- | | |

## Patentansprüche

1. Materialstrang-Behandlungsvorrichtung mit einer Trenneinrichtung (36) zum Unterteilen eines Materialstrangs (72), mit einem Transportsystem (10), das zumindest eine vordere und eine hintere Transporteinheit (12, 24) aufweist, wobei die Trenneinrichtung (36) an einem Spalt (34) zwischen den Transporteinheiten (12, 24) angeordnet ist, mit zumindest einer Antriebseinheit (44), die dazu vorgesehen ist, zumindest eine Transporteinheit (12, 24) relativ zur anderen Transporteinheit (12, 24) zu bewegen, wodurch der Materialstrang (72) den Spalt (34) zwischen den Transporteinheiten (12, 24) überbrücken kann, und mit einer Höheneinstelleinheit (46), die dazu vorgesehen ist, eine Relativbewegung in vertikaler Richtung zu bewirken,
**dadurch gekennzeichnet, dass**
die Antriebseinheit (44) dazu vorgesehen ist, eine Scheitelhilfslinie (22) der vorderen Transporteinheit (12) über eine Scheitelhilfslinie (32) der hinteren Transporteinheit (24) zu führen, wobei bei einer Bewegung der vorderen Transporteinheit (12) zu der hinteren Transporteinheit (24) in Richtung einer Transportrichtung (42) die vordere Transporteinheit (12) einen Hub erfährt, so dass sich durch die Höheneinstelleinheit (46) ein Höhenversatz (82) zwischen Oberseiten von Transportbändern (18, 30) der beiden Transporteinheiten (12, 24) einstellt.

2. Vorrichtung nach Anspruch 1,
**dadurch gekennzeichnet, dass**
die vordere Transporteinheit (12) in Richtung der Transportrichtung (42) und/oder relativ zum Materialstrang (72) bewegbar ist.

3. Vorrichtung nach Anspruch 1 oder 2,
**dadurch gekennzeichnet, dass**
die Transporteinheiten (12, 24) relativ zueinander so beweglich sind, dass bei einer Annäherung während einer Bewegung die erste Scheitelhilfslinie (22) einer Endumlenkung (16) der vorderen Transporteinheit (12) in Transportrichtung (42) mindestens mit der zweiten Scheitelhilfslinie (32) einer Anfangsumlenkung (26) der hinteren Transporteinheit (24) zusammenfällt.

4. Vorrichtung zumindest nach Anspruch 1,
**dadurch gekennzeichnet, dass**
ein Hubzylinder (60) vorgesehen ist, um den Höhenversatz (82) einzustellen,

5. Vorrichtung nach einem der vorhergehenden Ansprüche,
**dadurch gekennzeichnet, dass**
die Höheneinstelleinheit zumindest eine Rampe (58) aufweist.

6. Vorrichtung nach einem der vorhergehenden Ansprüche,
**dadurch gekennzeichnet, dass**
die Transporteinheit (12, 24) zumindest eine Anfangsumlenkung (14, 26) und eine Endumlenkung (16, 28) aufweist, wobei ein Durchmesser der Endumlenkung (16) der vorderen Transporteinheit (12) kleiner ist als ein Durchmesser der Anfangsumlenkung (26) der hinteren Transporteinheit (24).

7. Vorrichtung nach wenigstens einem der Ansprüche 3 bis 6,
**dadurch gekennzeichnet, dass**
die End- und/oder Anfangsumlenkung (16, 26) zumindest einer der Transporteinheiten (12, 24) eine Trennkante (84) aufweist.

8. Vorrichtung nach einem der vorhergehenden Ansprüche,
**gekennzeichnet durch**
eine Temperiareinrichtung (62), die wenigstens einer der Transporteinheiten (12, 24) zuordenbar ist.

9. Vorrichtung nach Anspruch 8,
**dadurch gekennzeichnet, dass**
die Temperiereinrichtung (62) eine Heizeinrichtung (64) aufweist.

10. Vorrichtung nach Anspruch 8 oder 9,
**dadurch gekennzeichnet, dass**
die Temperiereinrichtung (62) eine Abdeckhaube (66) umfasst.

11. Vorrichtung nach Anspruch 10,
**dadurch gekennzeichnet, dass**
die Abdeckhaube (66) zumindest ein Heizelement (68) umfasst.

12. Vorrichtung nach einem der vorhergehenden Ansprüche,
**dadurch gekennzeichnet, dass**
eine Steuerungs- und/oder Regelungseinrichtung (50, 54, 56) vorgesehen ist zur Einstellung einer jeweiligen Transportgeschwindigkeit und/oder Transportrichtung (42) der Transporteinheiten (12, 24).

13. Verfahren zum Behandeln eines Materialstrangs in einer Materialstrang-Behandlungsvorrichtung mit einer Trenneinrichtung (36), mit der der Materialstrang (72) unterteilt wird, mit einem Transportsystem (10) mit einer vorderen und hinteren Transporteinheit (12, 24), auf das der Materialstrang aufgebracht wird, wobei die Trenneinrichtung (36) an einem Spalt zwischen den Transporteinheiten (12, 24) angeordnet ist, und mit zumindest einer Antriebseinheit (44), die dazu vorgesehen ist, zumindest eine Transporteinheit (12, 24) relativ zur anderen Transporteinheit (12, 24) zu bewegen, wodurch der Materialstrang (72) den Spalt (34) zwischen den Transporteinheiten (12, 24) überbrücken kann, wobei nach einem Trennvorgang wenigstens eine der Transporteinheiten (12, 24) relativ zur anderen Transporteinheit (12, 24) bewegt wird,
**dadurch gekennzeichnet, dass**
die Antriebseinheit (44) eine Scheitelhilfslinie (22) der vorderen Transporteinheit (12) über eine Scheitelhilfslinie (32) der hinteren Transporteinheit (24) führt, wobei bei einer Bewegung der vorderen Transporteinheit (12) zu der hinteren Transporteinheit (24) in Richtung einer Transportrichtung (42) die vordere Transporteinheit (12) einen Hub erfährt, so dass sich durch eine Höheneinstelleinheit (46) ein Höhenversatz (82) zwischen Oberseiten von Transportbändern (18, 30) der beiden Transporteinheiten (12, 24) einstellt.

14. Verfahren nach Anspruch 13,
**dadurch gekennzeichnet, dass**
nach dem Unterteilen des Materialstrangs (72) die vordere Transporteinheit (12) in Richtung der Transportrichtung (42) und/oder relativ zum Materialstrang (72) bewegt wird.

15. Verfahren nach Anspruch 13 oder 14,
**dadurch gekennzeichnet, dass**
nach dem Unterteilen bei Annäherung der beiden Transporteinheiten (12, 24) die vordere Transporteinheit (12) über die hintere Transporteinheit (24) bewegt wird.

16. Verfahren nach einem der Ansprüche 13 bis 15,
**dadurch gekennzeichnet, dass**
nach dem Unterteilen bei Annäherung der beiden Transporteinheiten (12, 24) die hintere Transporteinheit (24) unter die vordere Transporteinheit (12) bewegt wird.

17. Verfahren nach einem der Ansprüche 13 bis 16,
**dadurch gekennzeichnet, dass**
der Materialstrang (72) auf wenigstens einer der beiden Transporteinheiten (12, 24) beheizt wird.

18. Verfahren nach einem der Ansprüche 13 bis 17,
**gekennzeichnet durch**
eine Dosiereinrichtung (74), die dazu vorgesehen ist, einen dickengeregelten Materialaustrag einzustellen, so dass der Materialstrang (72) in seinem Unterteilbereich (80) mit einer reduzierten Materialstärke versehen wird.

## Claims

1. Treatment apparatus for material strands, with a separation device (36) for subdividing a material strand (72), with a transport system (10) which has at least one front and one rear transport unit (12, 24), the separation device (36) being arranged at a gap (34) between the transport units (12, 24), with at least one drive unit (44), which is provided for moving at least one transport unit (12, 24) in relation to the other transport unit (12, 24), allowing the material strand (72) to bridge the gap (34) between the transport units (12, 24), and with a height setting unit (46), which is provided for causing a relative movement in a vertical direction,
**characterised in that**
the drive unit (44) is provided for guiding an auxiliary apex line (22) of the front transport unit (12) over an auxiliary apex line (32) of the rear transport unit (24), wherein, in a movement of the front transport unit (12) towards the rear transport unit (24) in a transport direction (42), the first transport unit (12) experiences a lift, as a result of which a height offset (82) between upper sides of conveyor belts (18, 30) of the two transport units (12, 24) is established by the height setting unit (46).

2. Apparatus according to claim 1,
**characterised in that**
the front transport unit (12) is movable in the transport direction (42) and/or in relation to the material strand (72).

3. Apparatus according to claim 1 or 2,
**characterised in that**
the transport units (12, 24) are movable in relation to one another such that, in the event of an approach during a movement in the transport direction (42), the first auxiliary apex line (22) of an end deflection (16) of the front transport unit (12) coincides at least with the second auxiliary apex line (32) of a start deflection (26) of the rear transport unit (24).

4. Apparatus at least according to claim 1,
**characterised in that**
a lifting cylinder (60) is provided for setting the height offset (82).

5. Apparatus according to one of the preceding claims,
**characterised in that**
the height setting unit (46) comprises at least one ramp (58).

6. Apparatus according to one of the preceding claims,
**characterised in that**
the transport unit (12, 24) comprises at least one start deflection (14, 26) and one end deflection (16, 28), wherein a diametre of the end deflection (16) of the front transport unit (12) is smaller than a diametre of the start deflection (26) of the rear transport unit (24).

7. Apparatus according to at least one of claims 3 to 6,
**characterised in that**
the end and/or start deflection (16, 26) of at least one of the transport units (12, 24) comprises a separation edge (84).

8. Apparatus according to one of the preceding claims,
**characterised by**
a temperature control device (62), which can be allocated to at least one of the transport units (12, 24).

9. Apparatus according to claim 8,
**characterised in that**
the temperature control device (62) comprises a heating device (64).

10. Apparatus according to claim 8 or 9,
**characterised in that**
the temperature control device (62) comprises a covering hood (66).

11. Apparatus according to claim 10,
**characterised in that**
the covering hood (66) comprises at least one heating element (68).

12. Apparatus according to one of the preceding claims,
**characterised in that**
a control and/or regulation device (50, 54, 56) is provided for setting a respective transport speed and/or transport direction (42) of the transport units (12, 24).

13. Method for treating a material strand in an apparatus for treating a material strand, with a separation device (36) for subdividing the material strand (72), with a transport system (10) which has a front and a rear transport unit (12, 24), onto which transport system (10) the material strand is applied, the separation device (36) being arranged at a gap between the transport units (12, 24), and with at least one drive unit (44), which is provided for moving at least one transport unit (12, 24) in relation to the other transport unit (12, 24), allowing the material strand (72) to bridge the gap (34) between the transport units (12, 24), wherein after a separation operation at least one of the transport units (12, 24) is moved in relation to the other transport unit (12, 24),
**characterised in that**
the drive unit (44) guides an auxiliary apex line (22) of the front transport unit (12) over an auxiliary apex line (32) of the rear transport unit (24), wherein, in a movement of the front transport unit (12) towards the rear transport unit (24) in a transport direction (42), the front transport unit (12) experiences a lift, as a result of which a height offset (82) between upper sides of conveyor belts (18, 30) of the two transport units (12, 24) is established by a height setting unit (46).

14. Method according to claim 13,
**characterised in that**
after the subdivision of the material strand (72) the front transport unit (12) is moved in the transport direction (42) and/or in relation to the material strand (72).

15. Method according to claim 13 or 14,
**characterised in that**
after the subdivision, in the event of an approach of the two transport units (12, 24), the front transport unit (12) is moved over the rear transport unit (24).

16. Method according to one of claims 13 to 15,
**characterised in that**
after the subdivision, in the event of an approach of the two transport units (12, 24), the rear transport unit (24) is moved underneath the front transport unit (12).

17. Method according to one of claims 13 to 16,
**characterised in that**
the material strand (72) is heated on at least one of the two transport units (12, 24).

18. Method according to one of claims 13 to 17,
**characterised by**
a dosing device (74), which is provided for setting a material discharge of regulated thickness, such that the material strand (72) is provided with a reduced material thickness in its subdivision region (80).

## Revendications

1. Dispositif de traitement de faisceau de matériau avec un dispositif de séparation (36) pour subdiviser une faisceau de matériau (72), avec un système de transport (10) comprenant au moins une unité de transport antérieure (12) et une unité de transport postérieure (24), le dispositif de séparation (36) étant disposé à une fente (34) entre les unités de transport (12, 24), avec au moins une unité de propulsion (44) prévue à mouvoir au moins une unité de transport (12, 24) relativement à l'autre unité de transport (12, 24), permettant la faisceau de matériau (72) à ponter la fente (34) entre les unités de transport (12, 24), et avec une unité d'ajustement de niveau (46) prévue à effectuer un mouvement relatif dans une direction verticale,
**caractérisé en ce que**
l'unité de propulsion (44) est prévue à guider une ligne auxiliaire de vertex (22) de l'unité de transport antérieure (12) au-dessus d' une ligne auxiliaire de vertex (32) de l'unité de transport postérieure (24),
un levage arrivant à l'unité de transport antérieure (12) dans un mouvement de l'unité de transport antérieure (12) vers l'unité de transport postérieure (24) dans une direction de transport (42), de telle sorte que se produit par le biais de l'unité d'ajustement de niveau (46) un déport de niveau (82) entre des faces supérieures des courroies transporteuses (18, 30) des deux unités de transport (12, 24).

2. Dispositif selon la revendication 1,
**caractérisé en ce que**
l'unité de transport antérieure (12) peut être mouvée dans la direction de transport (42) et/ou relativement à la faisceau de matériau (72).

3. Dispositif selon l'une quelconque des revendications 1 ou 2,
**caractérisé en ce que**
les unités de transport (12, 24) peuvent être mouvées l'une relativement à l'autre de telle sorte que, dans un rapprochement pendant un mouvement dans la direction de transport (42), la première ligne auxiliaire de vertex (22) d'une déflexion terminale (16) de l'unité de transport antérieure (12) coïncide au moins avec la deuxième ligne auxiliaire de vertex (32) d'une déflexion initiale (26) de l'unité de transport postérieure (24).

4. Dispositif selon au moins la revendication 1,
**caractérisé en ce qu'**
un cylindre de levage (60) est prévu à ajuster le déport de niveau (82).

5. Dispositif selon l'une quelconque des revendications précédentes,
**caractérisé en ce que**
l'unité d'ajustement de niveau (46) comporte au moins une rampe (58).

6. Dispositif selon l'une quelconque des revendications précédentes,
**caractérisé en ce que**
l'unité de transport (12, 24) comporte au moins une déflexion initiale (14, 26) et une déflexion terminale (16, 28), un diamètre de la déflexion terminale (16) de l'unité de transport antérieure (12) étant plus petit qu'un diamètre de la déflexion initiale (26) de l'unité de transport postérieure (24).

7. Dispositif selon au moins une des revendications 3 à 6,
**caractérisé en ce que**
la déflexion terminale et/ou initiale (16, 26) d'au moins une des unités de transport (12, 24) comporte une arête tronçonneuse (84).

8. Dispositif selon l'une quelconque des revendications précédentes,
**caractérisé par**
un dispositif de températion (62), lequel peut être attribué à au moins une des unités de transport (12, 24).

9. Dispositif selon la revendication 8,
**caractérisé en ce que**
le dispositif de températion (62) comporte un dispositif de chauffage (64).

10. Dispositif selon la revendication 8 ou 9,
**caractérisé en ce que**
le dispositif de températion (62) comporte un capot de recouvrement (66).

11. Dispositif selon la revendication 10,
**caractérisé en ce que**
le capot de recouvrement (66) comporte au moins un élément de chauffage (68).

12. Dispositif selon l'une quelconque des revendications précédentes,
**caractérisé en ce qu'**
un dispositif de contrôle et/ou réglage (50, 54, 56) est prévu pour l'ajustement d'une respective vélocité de transport et/ou direction de transport (42) des unités de transport (12, 24).

13. Procédé pour traiter une faisceau de matériau dans un dispositif de traitement de faisceau de matériau,
comprenant un dispositif de séparation (36), par le biais duquel la faisceau de matériau (72) est subdivisée,
comprenant un système de transport (10) avec une unité de transport antérieure (12) et une unité de transport postérieure (24), sur lequel la faisceau de matériau (72) est mise, le dispositif de séparation (36) étant disposé à une fente (34) entre les unités de transport (12, 24), et
comprenant au moins une unité de propulsion (44), laquelle est prévue à mouvoir au moins une unité de transport (12, 24) relativement à l'autre unité de transport (12, 24),
permettant la faisceau de matériau (72) à ponter la fente (34) entre les unités de transport (12, 24), au moins une des unités de transport (12, 24) étant mouvée relativement à l'autre unité de transport (12, 24) suivant un processus de séparation,
**caractérisé en ce que**
l'unité de propulsion (44) guide une ligne auxiliaire de vertex (22) de l'unité de transport antérieure (12) au-dessus d'une ligne auxiliaire de vertex (32) de l'unité de transport postérieure (24),
un levage de l'unité de transport antérieure (12) arrivant à l'unité de transport antérieure (12) dans un mouvement de l'unité de transport antérieure (12) vers l'unité de transport postérieure (24) dans une direction de transport (42), de telle sorte que se produit par le biais d'une unité d'ajustement de niveau (46) un déport de niveau (82) entre des faces supérieures des courroies transporteuses (18, 30) des deux unités de transport (12, 24).

14. Procédé selon la revendication 13,
**caractérisé en ce que,**
suivant la subdivision de la faisceau de matériau (72), l'unité de transport antérieure (12) est mouvée dans la direction de transport (42) et/ou relativement à la faisceau de matériau (72).

15. Procédé selon la revendication 13 ou 14,
**caractérisé en ce que,**
suivant la subdivision, dans un rapprochement des deux unités de transport (12, 24), l'unité de transport antérieure (12) est mouvée au-dessus de l'unité de transport postérieure (24).

16. Procédé selon l'une quelconque des revendications 13 à 15,
**caractérisé en ce que,**
suivant la subdivision, dans un rapprochement des deux unités de transport (12, 24), l'unité de transport postérieure (24) est mouvée au-dessous de l'unité de transport antérieure (12).

17. Procédé selon l'une quelconque des revendications 13 à 16,
**caractérisé en ce que**
la faisceau de matériau (72) est chauffée sur au moins une des deux unités de transport (12, 24).

18. Procédé selon l'une quelconque des revendications 13 à 17,
**caractérisé par**
un dispositif de dosage (74), lequel est prévu à ajuster une décharge de matériau réglée concernant un épaisseur, de telle sorte que la faisceau de matériau (72) est pourvue d'un épaisseur de matériau réduit dans sa zone de subdivision (80).
